# EUROPÄISCHE PATENTSCHRIFT

(11) **EP 2 507 020 B1**
(45) Veröffentlichungstag und Bekanntmachung des Hinweises auf die Patenterteilung: **09.10.2013**
(21) Anmeldenummer: 10787314.3
(22) Anmeldetag: 01.12.2010
(51) Int. Cl.: B27N 3/00

(54) **LEICHTE HOLZWERKSTOFFPLATTE**
LIGHTWEIGHT WOOD MATERIAL BOARD
PANNEAU DÉRIVÉ DU BOIS, LÉGER

(30) Priorität: 02.12.2009 DE 102009056843
(43) Veröffentlichungstag der Anmeldung: 10.10.2012
(60) Teilanmeldung: 13180802.4
(73) Patentinhaber: Michanickl, Andreas, 83101 Thansau (DE)
(72) Erfinder: Michanickl, Andreas, 83101 Thansau (DE)
(74) Vertreter: Pfenning, Meinig & Partner GbR
(86) Internationale Anmeldenummer: PCT/EP2010/007305
(87) Internationale Veröffentlichungsnummer: WO 2011/066963

(56) Entgegenhaltungen:
- WO-A1-2005/018890
- US-A- 4 246 310
- US-A- 5 436 069
- US-A1- 2003 150 522
- US-A1- 2005 019 548

## Beschreibung

Die Erfindung betrifft eine leichte einlagig aufgebaute Holzwerkstoffplatte gemäß Anspruch 1. Weiterhin betrifft die Erfindung ein Verfahren zur Herstellung einer derartigen leichten einlagig aufgebauten Holzwerkstoffplatte gemäß Anspruch 14.

Konventionelle Spanplatten haben üblicherweise einen dreischichtigen Aufbau, um eine gute Beschichtbarkeit zu gewährleisten. In der Mittelschicht kommen dabei etwas größere Späne zum Einsatz, während in den Deckschichten üblicherweise kleinere Späne zum Einsatz kommen, die weitgehend geschlossene Oberflächen erzeugen.

Die kleinen Späne müssen zunehmend auch aus Rundholz erzeugt werden, da Sägespäne zunehmend zu Brennstoffpellets verarbeitet werden. Die Herstellung der kleineren Späne aus Holz erfordert daher sehr viel Energie. Zudem müssen diese aufgrund ihrer geringen Größe stärker beleimt werden.

Um eine ausreichende Verklebung dieser kleinen Späne zu erreichen, müssen die aus den kleinen Spänen aufgebauten Deckschichten sehr stark verdichtet werden. Dadurch ist es erforderlich, die Spanplatten mit vergleichsweise viel Material herzustellen, was hohe Rohdichten bei den dreischichtig aufgebauten Platten bedingt. Hohe Rohdichten bedingen aber neben einem hohen Gewicht und einem hohen Materialverbrauch auch einen hohen elektrischen und thermischen Energieaufwand wie auch einen großen Einsatz an Maschinen zur Herstellung solcher dreischichtiger Platten.

Ausgehend hiervon ist es die Aufgabe der vorliegenden Erfindung, eine leichte einlagig aufgebaute Holzwerkstoffplatte vorzuschlagen, die zum einen sich durch eine geringe Rohdichte auszeichnet und die andererseits leicht und gut mit herkömmlichen Beschichtungen beschichtbar ist. Aufgabe der vorliegenden Erfindung ist es weiterhin, ein Herstellungsverfahren zur Herstellung einer derartigen Holzwerkstoffplatte anzugeben.

Die Erfindung wird in Bezug auf die leichte einlagig aufgebaute Holzwerkstoffplatte durch die Merkmale des Patentanspruchs 1 gelöst, das Verfahren zur Herstellung der erfindungsgemäßen Werkstoffplatte ist durch die Merkmale des Patentanspruchs 14 gekennzeichnet. Die Unteransprüche zeigen vorteilhafte Weiterbildungen auf.

Erfindungsgemäß wird somit nach Patentanspruch 1 eine leichte einlagig aufgebaute Holzwerkstoffplatte vorgeschlagen, wobei diese aus einer Mischung aus Schlag- und Schneidspänen besteht und der Anteil der Schlagspäne zwischen 5 und 30 % und der Anteil der Schneidspäne zwischen 70 und 95 Gew.-% liegt. Die erfindungsgemäße Holzwerkstoffplatte zeichnet sich besonders dadurch aus, dass diese eine Rohdichte von unter 500 kg/m³ aufweist.

Bei der erfindungsgemäßen Holzwerkstoffplatte ist besonders darauf hinzuweisen, dass die Platte, obwohl sie einlagig ausgebildet ist und eine geringe Rohdichte aufweist, physikalische Eigenschaften zeigt, die mit denen aus dem bisherigen Stand der Technik bekannten dreilagigen Platten vergleichbar sind. Dies gilt insbesondere für die Biegefestigkeit und Querzugsfestigkeit. Damit ergeben sich weitreichende Vorteile, da die erfindungsgemäße Platte sehr leicht ist und damit einfach zu handhaben und sich somit auch in Bezug auf die Handhabung, d.h. die Verarbeitung und die Lagerung entscheidende Vorteile ergeben. Die erfindungsgemäße Platte lässt sich auch sehr einfach beschichten oder aber, wenn es erforderlich ist, noch mit weiteren Platten zu einem Verbund verbinden.

Bei der erfindungsgemäßen Holzwerkstoffplatte ist zusätzlich darauf hinzuweisen, dass die Herstellung deutlich kostengünstiger ist, da ein geringer Holzund Energieeinsatz erforderlich ist, der im Regelfall um ein Drittel unter denen der herkömmlichen Spanplatten, d.h. bei dreischichtigem Aufbau bzw. hoher Rohdichte, liegt.

Die erfindungsgemäße Holzwerkstoffplatte kann dabei so aufgebaut sein, dass die Schlag- und Schneidspäne im Wesentlichen gleichmäßig in der Holzwerkstoffplatte verteilt sind oder aber dass die Schneidspäne zumindest teilweise an der Ober- und Unterseite der Plattenoberfläche und die Schlagspäne überwiegend mittig angeordnet sind. Derartige unterschiedliche Ausbildungen der Holzwerkstoffplatte können sehr einfach durch an und für sich im Stand der Technik bekannte Streuverfahren erreicht werden.

Insbesondere die Variante, bei der die Schneidspäne zumindest teilweise an der Ober- und Unterseite der Plattenoberfläche angeordnet sind (also die Plattenoberflächen ausbilden), bringen den Vorteil mit sich, dass dadurch eine optimal plane Fläche an der Ober- und Unterseite erreicht werden kann, so dass insbesondere diese Ausführungsform sich insbesondere zum Beschichten aufgrund der planen Plattenober- und - unterseite eignet. Bei dieser Ausführungsform ist es dabei besonders bevorzugt, wenn dabei so vorgegangen wird, dass der Streuvorgang so gesteuert wird, dass im Wesentlichen nur die großflächigen Schneidspäne beim Streuen zumindest teilweise bevorzugt zur Ober- und Unterseite der späteren Plattenoberfläche orientiert sind. Die kleineren Schneidspäne und die Schlagspäne sind dann bevorzugt mittig angeordnet. Große Schneidspäne im Sinne der Erfindung sind Schneidspäne, die mindestens 10 mm lang und 3 mm breit, bevorzugt mindestens 20 mm lang und mindestens 5 mm breit, sind. Alle Späne kleiner als 10 mm in der Länge und 3 mm in der Breite sind kleine Schneidspäne.

Bei der erfindungsgemäßen Holzwerkstoffplatte werden, um die Rohdichte von unter 500 kg/m³ zu gewährleisten, überwiegend Holzarten verwendet, deren Rohdichte < 500 kg/m³ ist. Die erfindungsgemäße Holzwerkstoffplatte kann somit entweder vollständig oder zumindest überwiegend aus Holzarten gebildet sein, deren Rohdichte < 500 kg/m³ beträgt.

Die bei der erfindungsgemäßen Holzwerkstoffplatte eingesetzten Schneid- bzw. Schlagspäne werden nach dem im Stand der Technik bekannten Verfahren hergestellt. So können die Schneidspäne durch Zerspanung auf Messerringzerspanern oder Messerwellenzerspanern oder anderen im Stand der Technik bekannten Zerspanungsverfahren hergestellt werden. Für die Zerspanung können einerseits Hackschnitzel, aber auch Rundholz eingesetzt werden. Die Schneidspäne, die mit derartigen Zerspanungsverfahren hergestellt werden, weisen gewöhnlicherweise eine Dicke von ca. 0,2 bis 0,9 mm, vorzugsweise von 0,3 bis 0,6 mm und eine Länge von 5 bis 500 mm, vorzugsweise von 25 bis 45 mm, und eine Breite von ca. 3 bis 30 mm, vorzugsweise von 5 bis 20 mm auf. Die Länge der Späne kann aber auch in Abhängigkeit vom Zerspanungsverfahren so z.B. dann, wenn Rundholz mit einem Messerringzerspaner zerspant wird, 15 bis 145 mm betragen.

Die Schlagspäne, die für die erfindungsgemäße Holzwerkstoffplatte eingesetzt werden, sind mit einem geringeren Anteil, nämlich mit 5 bis 30 %, bevorzugt mit 10 bis 30 %, in der Holzwerkstoffplatte enthalten. Die Herstellung derartiger Schlagspäne ist ebenfalls im Stand der Technik bekannt und erfolgt üblicherweise durch Schlagmühlen oder andere Mühlen. Dadurch können Schlagspäne hergestellt werden, die aus gröberen, dickeren Spänen bzw. Partikeln bestehen und die einen streichholzartigen, knüppelartigen oder kubischen Charakter aufweisen. Derartige Späne bzw. Partikel weisen gewöhnlicherweise dann einen geringen Schlankheitsgrad bei gleichzeitig geringerer Breite von 0,5 bis 4 mm und einer Dicke von 0,5 bis 4 mm, vorzugsweise von 1 bis 2 mm auf.

Bei der Herstellung von Spänen für die erfindungsgemäße Platte kann in geringerem Umfang auch sehr feines Spangut oder Holzstaub entstehen. Derartiges Feingut kann mitverarbeitet werden oder zur Verbesserung der Platteneigenschaften mit einer Siebmaschenweite von unter 2,5 mm, bevorzugt von unter 1,5 mm, aus den Spänen abgetrennt werden.

Die erfindungsgemäße Holzwerkstoffplatte weist bevorzugt eine Dicke von 6 bis 200 mm, besonders bevorzugt von 12 bis 40 mm auf. Wie an und für sich im Stand der Technik bekannt, kann auch die Rohdichte der erfindungsgemäßen Holzwerkstoffplatte noch weiterhin dadurch beeinflusst werden, dass die Platte zusätzlich 5 bis 50 %, bezogen auf den Holzanteil, an aufgeschäumten Partikeln, wie z.B. Polystyrol- und/oder Polyurethanpartikel, enthält.

Als Leim zum Verleimen der Späne untereinander und damit zur Bildung der Holzwerkstoffplatte kann an und für sich jeder im Stand der Technik bekannte Leim eingesetzt werden. Bevorzugt ist es dabei, wenn 2 bis 16 % Leim bezogen auf den Holzanteil verwendet werden. Als Beispiel für geeignete Leime sind Isocyanatklebstoff, Polyurethanklebstoff, Polykondensationsleim mit oder ohne Streckmittel, acrylathaltiger Klebstoffe, Polyurethanklebstoffe, Polykondensationsleime mit oder ohne Streckmittel, acrylathaltiger Klebstoffe oder Mischharze aus dem Stand der Technik zu nennen.

Die erfindungsgemäße einlagige Holzwerkstoffplatte kann selbstverständlich, wie es aus dem Bereich der Spanplatten bekannt ist, noch mit Beschichtungen versehen werden.

Die wenigstens eine Beschichtung kann dabei aus einem flächigen Werkstoff mit einer Rohdichte von mehr als 500 kg/m³ bestehen. Die Erfindung umfasst aber auch Ausführungsformen, bei denen die wenigstens eine Beschichtung aus einer Finishfolie, einen Schichtstoff (HPL/CPL), einem anderen Papier- oder faserartigen Material oder aus einer Kunststofffolie besteht, die üblicherweise eine Dicke von mehr als 0,1 mm aufweist.

Die Beschichtungsmaterialien wie vorstehend erwähnt können leicht mit der einlagig aufgebauten erfindungsgemäßen Platte durch einen wasserfreien Klebstoff, wie z.B. ein Schmelzklebstoff, oder einem wasserfreien Polyurethanklebstoff verklebt werden. Bei den Beschichtungen wie vorstehend erwähnt ist es besonders bevorzugt, wenn die wenigstens eine Finishfolie für die Beschichtung eine Dicke von 0,05 bis 0,5 mm, vorzugsweise von 0,1 bis 0,3 mm aufweist.

Die wenigstens eine Finishfolie für die Beschichtung kann auch aus einem Basispapier mit einem Flächengewicht von 20 bis 200 g/m³, vorzugsweise von 50 bis 100 g/m³ hergestellt werden.

Weiterhin kann die wenigstens eine Finishfolie dann ein Flächengewicht von 80 bis 350 g/m², bevorzugt von 120 bis 250 g/m² bezogen auf die fertige Finishfolie aufweisen.

Die für die Beschichtung vorgesehene erfindungsgemäße Platte, weist üblicherweise eine Rohdichte von ca. 360 bis 480 kg/m³, vorzugsweise von 400 bis 440 kg/m³ auf.

Die Erfindung umfasst weiterhin ein Verfahren zur Herstellung einer wie vorstehend beschriebenen leichten einlagigen Holzwerkstoffplatte.

Nach dem erfindungsgemäßen Verfahren werden dazu die Späne in den wie in Anspruch 1 angegebenen Gewichtsverhältnissen gemischt und in einem Trommelmischer beleimt, und dann mit mindestens einem Streukopf gestreut sowie anschließend unter Druck und Temperatur zur Holzwerkstoffplatte verpresst. Bevorzugt wird in einem kontinuierlichen Verfahren gearbeitet.

Bevorzugt ist dabei, dass die Späne in einem Trommelmischer beleimt werden, wie er z.B. in der OSB-Produktion zum Einsatz kommt, um die Spanstruktur möglichst nicht zu beschädigen. Beim erfindungsgemäßen Verfahren ist es weiterhin vorteilhaft, wenn die Verpressung der kontinuierlich gestreuten Spanmatte auf einer kontinuierlichen Doppelbandpresse oder einer kontinuierlichen Dampfinjektionspresse oder einer Dampf/Luftinjektionspresse erfolgt, weil dadurch eine besonders hohe Absenkung der Rohdichte erreicht werden kann.

Die Streuung der Späne dieser einlagig aufgebauten, leichten Holzwerkstoffplatte kann durch eine mechanische Streuung durch Walzen mit nur einem oder bei sehr großen Produktionsmengen mit zwei Streuköpfen erfolgen. Es sind nicht zwingend drei oder vier Streuköpfe wie bei der Produktion herkömmlicher dreischichtiger Spanplatten erforderlich.

Die Beleimung der Späne der erfindungsgemäßen Holzwerkstoffplatte erfolgt.vorteilhafterweise mit einem Trommelmischer und nicht mit einem in der Spanplattenproduktion üblichen Zwangsmischer, der die Späne nachzerkleinert. Solche Trommelmischer sind aus der Produktion von Oriented Strand Board bekannt und werden dort üblicherweise zur Beleimung sehr großer Späne mit über 100 mm Länge eingesetzt. Der Trommelmischer wird vorteilhafterweise für die Beleimung der Späne der erfindungsgemäßen Holzwerkstoffplatte etwas modifiziert, da deren Späne kürzer als bei Oriented Strand Board sind. Dazu werden mehr und längere Mitnehmer an der Innenseite der Trommel angebracht, die die Späne aufwirbeln.

Die Späne der erfindungsgemäßen Holzwerkstoffplatte können mit den bekannten Leimsystemen beleimt werden. Bei Einsatz von Polykondensationsleimen, insbesondere bei Einsatz von Harnstoff-Formaldehydleimen ist der Zusatz von Streckmitteln wie z. B. Roggenmehl in einer Größenordnung von 10 bis 100 % bezogen auf Festharz von Vorteil um optimale Festigkeitseigenschaften zu erhalten.

Zur Herstellung der Platte werden Schneid- und Schlagspäne eingesetzt. Großflächige Schneidspäne, die z.B. durch Zerspanen von Rundholz mit einem Messerwellenzerspaner erzeugt werden, tragen besonders zu einer guten Biegefestigkeit und einem guten E-Modul bei und ermöglichen eine gute Beschichtbarkeit. Dies besonders dann, wenn sie beim Streuen durch eine entsprechende Einstellung der Streumaschine überwiegend nach außen zu den Breitflächen bzw. Oberflächen der leichten Holzwerkstoffplatte gestreut werden. Der Anteil dieser Späne nimmt dann von den Außenseiten der erfindungsgemäßen Holzwerkstoffplatte nach innen ab. Die Platte bleibt aber einschichtig aufgebaut.

Daneben werden zur Herstellung der Platte aus Hackschnitzeln durch Zerspanung über einen Messerringzerspaner erzeugte im Vergleich zu den vorgenannten Spänen eher schmale, lange Schneidspäne eingesetzt. Diese tragen besonders zu einer guten Biegesteifigkeit bei.

Weiterhin werden aus Hackschnitzeln über einen Mühle erzeugte, dicke bis kubische Schlagspäne eingesetzt. Diese verbessern die Querzugfestigkeit und die Schraubenauszugfestigkeit der erfindungsgemäßen, leichten, einlagig aufgebauten Holzwerkstoffplatte.

Das Mischungsverhältnis der Späne für die Herstellung der erfindungsgemäßen, leichten, einlagig aufgebauten Platte beträgt vorteilhafterweise etwa 5 bis 30 % Schlagspänen und 70 bis 95 % Schneidspänen.

Dabei ist es vorteilhaft, wenn die Schneidspäne je nach Verfügbarkeit von Rundholz für die Zerspanung zu etwa 20 bis 90% aus eher breiten Spänen bestehen, die aus Rundholz über einen Messerwellenzerspaner oder auch einen Messerringzerspaner für Rundholz hergestellt werden, und zu 10 bis 80% aus eher schmalen Schneidspänen bestehen, die aus Hackschnitzeln über einen Messerringzerspaner für Hackschnitzel hergestellt werden.

Auch ein Verzicht auf aus Hackschnitzeln über einen Messerringzerspaner erzeugte Späne ist möglich, wenn Rundholz kostengünstig verfügbar ist.

Das Mischungsverhältnis der Späne wird sich an der Verfügbarkeit und dem Preis von Hackschnitzeln und Rundholz orientieren.

Die Erfindung wird nachfolgend anhand der Beispiele 1 bis 6 sowie der Figuren 1 bis 5 näher erläutert.

Dabei zeigen
- Figur 1: in perspektivischer Darstellung eine erfindungsgemäße Holzwerkstoffplatte mit gleichmäßig verteilten Spänen,
- Figur 2: ebenfalls in perspektivischer Darstellung eine erfindungsgemäße Holzwerkstoffplatte, bei der die Oberflächen der erfindungsgemäßen Platte vollständig von flachen Schneidspänen bedeckt sind,
- Figur 3: einen stark vergrößerten Schnitt durch die Oberfläche der Platte nach Figur 1,
- Figur 4: einen stark vergrößerten Schnitt der Oberfläche der Platte nach Figur 2,
- Figur 5: leicht vergrößert Beispiele verschiedener Spantypen.

### Beispiele

### Beispiel 1:

Über einen Messerwellenzerspaner wird Fichten-Industrierundholz zu dünnen Spänen mit einer Länge von ca. 30 mm zerspant. Fichtenholz-Hackschnitzel werden über einen Messerringzerspaner zu dünnen, maximal 35 mm langen Spänen zerspant. Mit einer Schlagmühle werden weitere Fichtenholz-Hackschnitzel zu schmalen und etwa 1,5 mm dicken Schlagspänen zerkleinert. 20% Schlagspäne werden mit 40% über den Messerwellenzerspaner hergestellten Spänen und 40% über den Messerringzerspaner hergestellten Spänen vermischt und getrocknet. Das in dieser Mischung enthaltene Feingut und der ebenfalls darin enthaltene Holzstaub werden über ein Schwingsieb mit einer Maschenweite von 0,8 mm abgetrennt. Das vom Staub und Feingut befreite Spangut wird mit 4% PMDI (Klebstoff) bezogen auf die Spanmasse beleimt. Die beleimten Späne werden über einen Streukopf zu einer einschichtigen Spanmatte geformt, die dann mit einer kontinuierlichen Doppelbandpresse zu einer Platte mit einer Rohdichte von 420 kg/m² verpresst wird. Die so hergestellte leichte, einschichtige Holzwerkstoffplatte hat die in der unten befindlichen Tabelle dargestellten Materialkennwerte.

### Beispiel 2:

Wie Beispiel 1, jedoch wird bei der Streuung der Matte über die Einstellung der Streuwalzen erreicht, dass auf die Ober- und die Unterseite der Spanmatte nur dünne, flache Späne, aber keine dicken Schlagspäne gelangen. Nach dem Verpressen dieser Spanmatte hat die so hergestellte leichte, einschichtige Platte sehr ebene Oberflächen ohne kleine Vertiefungen. Die Materialkennwerte entsprechen den in der Tabelle unten dargestellten Werten der erfindungsgemäßen, leichten, einschichtigen Holzwerkstoffplatte. Auch hier erfolgen die Beleimung der Späne mit PMDI und die Verpressung des gestreuten Spankuchens auf einer kontinuierlichen Doppelbandpresse.

### Beispiel 3:

Wie Beispiel 1, jedoch werden anstatt Fichtenrundholz und Fichtenholz-Hackschnitzel Weidenrundholz und Weidenholz-Hackschnitzel eingesetzt.

### Beispiel 4:

Wie Beispiel 1, jedoch wird eine Mischung aus Fichtenrundholz und Weichlaubhölzern (Weide, Pappel) und eine Mischung aus Fichtenholz- und Weichlaubholz-Hackschnitzeln eingesetzt.

### Beispiel 5:

Wie Beispiel 1, jedoch werden 20% Schlagspäne und 80% über einen Messerwellenzerspaner hergestellte Späne eingesetzt. Dadurch wird die Oberflächengeschlossenheit weiter verbessert.

### Beispiel 6:

Wie Beispiel 1 bis 6 jedoch erfolgt die Verpressung der gestreuten Spanmatte (Spankuchen) nicht auf einer kontinuierlichen Doppelbandpresse sondern auf einer kontinuierlichen Dampfinjektionspresse.

### Tabelle

**Tabelle: Charakteristische Eigenschaften (Festigkeitseigenschaften, Dicken und Rohdichten) einer erfindungsgemäßen, leichten, einschichtigen Holzwerkstoffplatte und einer herkömmlichen Spanplatte**

| | Erfindungsgemäße, einschichtige, leichte Holzwerkstoffplatte | Herkömmliche, dreilagig aufgebaute Spanplatte |
|---|---|---|
| Dicke [mm] | 19 | 19 |
| Rohdichte [kg/m³] | 420 | 650 |
| Biegefestigkeit [N/mm²] | 14 | 13 |
| Biege-ElastizitätsModul [N/mm²] | 1800 | 1700 |
| Querzugfestigkeit [N/mm²] | 0,4 | 0,45 |
| Feuchtegehalt [%] | 6 | 6 |
| Dickenquellung nach 24 h Wasserlagerung [%] | 12 | 13 |

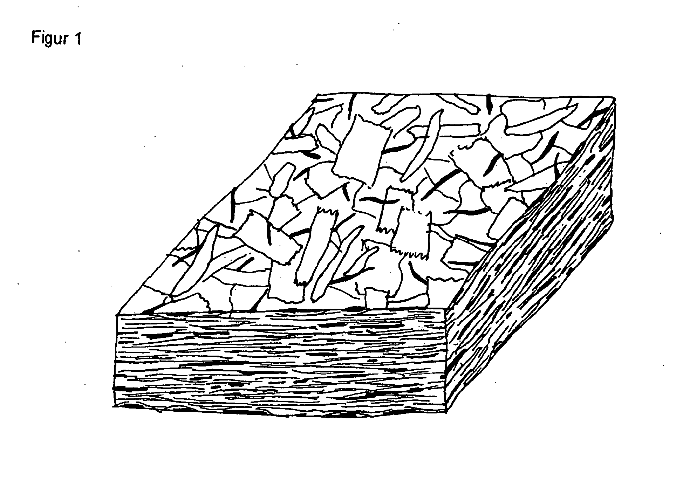

Figur 1 zeigt vergrößert eine erfindungsgemäße, leichte Holzwerkstoffplatte nach Anspruch 1, bei der die zur Herstellung verwendeten Späne gleichmäßig über die ganze Plattendicke verteilt sind. Auch die dickeren Schlagspäne (dunkel dargestellt) sind an den Plattenoberseiten.

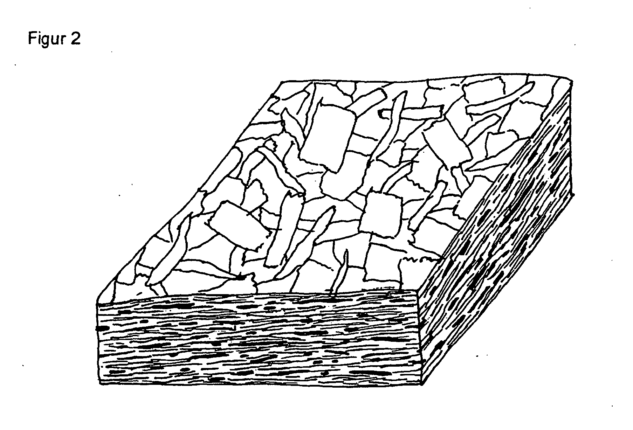

Figur 2 zeigt vergrößert eine erfindungsgemäße, leichte Holzwerkstoffplatte nach Anspruch 2, bei der sich die dickeren Schlagspäne nicht oder nur selten an den Plattenoberseiten befinden. Auch bei dieser Platte werden die Späne zunächst in dem gewünschten Mischungsverhältnis gemischt und beleimt. Bei der Streuung wird die Streumaschine jedoch so eingestellt, dass die Schlagspäne immer oder fast immer noch von flacheren Schneidspänen bedeckt sind.

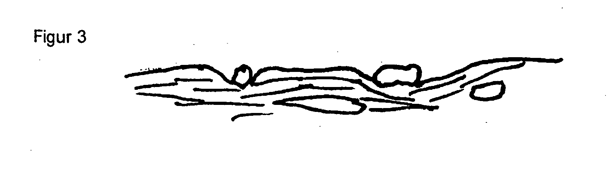

Figur 3 zeigt einen stark vergrößerten Schnitt durch die Oberfläche einer erfindungsgemäßen, leichten Holzwerkstoffplatte nach Anspruch 1. Die im Vergleich zu den Schneidspänen dicken Schlagspäne befinden sich auch an der Oberfläche der Platte. Sie drücken die dünnen Schneidspäne in die Platte hinein. Dadurch ist die Oberfläche der Platte uneben, bzw. weist für eine spätere Beschichtung ungünstige, kleine Vertiefungen auf.

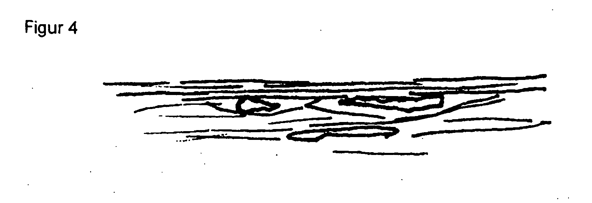

Figur 4 zeigt einen stark vergrößerten Schnitt durch die Oberfläche einer erfindungsgemäßen, leichten Holzwerkstoffplatte nach Anspruch 2. Die dickeren Schlagspäne sind von dünnen Schneidspänen bedeckt. Die Oberfläche der Platte ist dadurch ebener als bei der Platte in Figur 1, bei der sich Schlagspäne auch an der Oberfläche befinden.

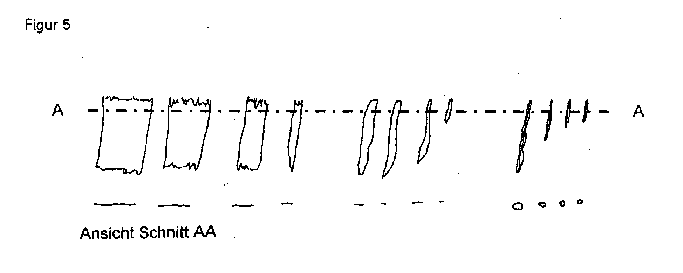

Figur 5 zeigt, leicht vergrößert, Beispiele verschiedener Spantypen, die zur Herstellung der erfindungsgemäßen, leichten Holzwerkstoffplatte eingesetzt werden. Oben im Bild sieht man eine Draufsicht auf die Späne. Darunter ist ein Querschnitt durch die Breite der Späne dargestellt. Links und in der Mitte sind Beispiele für Schneidspäne, ganz rechts sind Beispiele für Schlagspäne dargestellt. Die Späne ganz links können z. B. mit einem Messerwellenzerspaner aus Rundholz erzeugt werden. Sie sind eher gleichmäßig lang und dünn. Durch den Zerspanungsprozess sind sie an den Enden eher etwas ausgefranst. In der Mitte sind vier Beispiele für Späne dargestellt, die z. B. durch das Zerspanen von Hackschnitzeln mittels eines Messerringzerspaners für Hackschnitzel hergestellt werden können. Diese Späne sind ebenfalls relativ dünn und lang, aber eher ungleichmäßig breit. Ganz rechts sind vier Beispiele für Schlagspäne dargestellt. Diese sind eher schmal und dick (streichholzartig oder knüppelartig) und bewirken eine Aussteifung der leichten Platte, die zu höheren Biegefestigkeiten und Querzugfestigkeiten führt.

## Patentansprüche

1. Leichte, einlagig aufgebaute Holzwerkstoffplatte aus miteinander verleimten Spänen bzw. Holzpartikeln,
**dadurch gekennzeichnet, dass**
- diese eine Rohdichte von unter 500 kg/m³ aufweist,
- diese aus einer Mischung aus Schlag- und Schneidspänen besteht und der Anteil der Schlagspäne zwischen 5 und 30 % und der Anteil der Schneidspäne zwischen 70 und 95 % vom Holzanteil der Platte beträgt,
- die Länge der Späne im Durchschnitt bei unter 40 mm liegt.

2. Holzwerkstoffplatte nach Anspruch 1, **dadurch gekennzeichnet, dass** die Schlag- und Schneidspäne im Wesentlichen gleichmäßig in der Holzwerkstoffplatte verteilt sind.

3. Holzwerkstoffplatte nach Anspruch 1, **dadurch gekennzeichnet, dass** die Schneidspäne zumindest teilweise an der Ober- und Unterseite der Plattenoberfläche und die Schlagspäne überwiegend mittig, unterhalb der Plattenoberflächen angeordnet sind.

4. Holzwerkstoffplatte nach einem der Ansprüche 1 bis 3, **dadurch gekennzeichnet, dass** diese vollständig oder zumindest überwiegend aus Holzarten mit einer Rohdichte < 500 kg/m³ hergestellt worden ist.

5. Holzwerkstoffplatte nach einem der Ansprüche 1 bis 4, **dadurch gekennzeichnet, dass** die Schneidspäne durch Zerspanung von Hackschnitzeln auf einem Messerringzerspaner hergestellt worden sind, wobei die Späne eine Dicke von ca. 0,2 bis 0,9 mm, vorzugsweise von 0,3 bis 0,6 mm und eine Länge von 15 bis 100 mm, vorzugsweise von 25 bis 40 mm, und eine Breite von 3 bis 30 mm, vorzugsweise von 5 bis 20 mm aufweisen.

6. Holzwerkstoffplatte nach einem der Ansprüche 1 bis 5, **dadurch gekennzeichnet, dass** die Schneidspäne durch Zerspanung von Rundholz auf einem Messerwellenzerspaner hergestellt worden sind, wobei die Späne eine Dicke von ca. 0,2 bis 0,9 mm, vorzugsweise von 0,3 bis 0,6 mm, und eine Länge von 15 bis 100 mm, vorzugsweise von 25 bis 60 mm und eine Breite von 3 bis 30 mm, vorzugsweise von 5 bis 20 mm aufweisen.

7. Holzwerkstoffplatte nach einem der Ansprüche 1 bis 6, **dadurch gekennzeichnet, dass** die Schneidspäne durch Zerspanung von Rundholz auf einem Messerringzerspaner erzeugt werden, wobei die Späne eine Dicke von ca. 0,2 bis 0,9 mm, vorzugsweise von 0,3 bis 0,6 mm, und eine Länge von 15 bis 145 mm, vorzugsweise von 25 bis 60 mm, und eine Breite von 3 bis 30 mm, vorzugsweise von 5 bis 20 mm aufweisen.

8. Holzwerkstoffplatte nach einem der Ansprüche 1 bis 7, **dadurch gekennzeichnet, dass** die Schneidspäne durch Zerspanung auf einem anderen als den zuvor genannten Zerspanern hergestellt worden sind, wobei die Späne eine Dicke von ca. 0,2 bis 0,9 mm, vorzugsweise von 0,3 bis 0,6 mm und eine Länge von 15 bis 100 mm, vorzugsweise von 25 bis 60 mm, und eine Breite von 3 bis 30 mm, vorzugsweise von 5 bis 20 mm aufweisen.

9. Holzwerkstoffplatte nach einem der Ansprüche 1 bis 8, **dadurch gekennzeichnet, dass** der Anteil der Schlagspäne bevorzugt 10 bis 15 % vom Holzanteil der Platte beträgt und die Schlagspäne bevorzugt durch Schlagmühlen oder andere Mühlen hergestellt worden sind und aus gröberen, dickeren Spänen bzw. Partikeln bestehen, die einen streichholzartigen, knüppelartigen oder kubischen Charakter aufweisen, wobei die Späne bzw. Partikel einen geringen Schlankheitsgrad bei gleichzeitig geringerer Breite von 0,5 bis 4 mm und einer Dicke von 0,5 bis 4 mm, vorzugsweise von 1 bis 2 mm, besitzen.

10. Holzwerkstoffplatte nach mindestens einem der Ansprüche 1 bis 9, **dadurch gekennzeichnet, dass** 2 bis 16 % Leim bezogen auf den Holzanteil der Platte vorhanden sind.

11. Holzwerkstoffplatte nach Anspruch 10, **dadurch gekennzeichnet, dass** der Leim ausgewählt ist aus einem Isocyanatklebstoff, einem Polyurethanklebstoff, einem Polykondensationsleim, einem acrylathaltigem Klebstoff und/oder einem Mischharz.

12. Holzwerkstoffplatte nach einem der Ansprüche 1 bis 11, **dadurch gekennzeichnet, dass** die Platte zusätzlich 5 bis 50 % aufgeschäumte Partikel bezogen auf den Holzanteil, z.B. aus Polystyrol und/oder Polyurethan, enthält.

13. Holzwerkstoffplatte nach mindestens einem der Ansprüche 1 bis 12, **dadurch gekennzeichnet, dass** die Holzwerkstoffplatte eine Dicke von 6 bis 200 mm aufweist.

14. Verfahren zur Herstellung einer einlagig aufgebauten Holzwerkstoffplatte aus miteinander verleimten Spänen bzw. Holzpartikeln, wobei die Platte eine Rohdichte von unter 500 kg/m³ aufweist, aus einer Mischung aus Schlag- und Schneidspänen besteht und der Anteil der Schlagspäne zwischen 5 und 30 % und der Anteil der Schneidspäne zwischen 70 und 95 % vom Holzanteil der Platte beträgt, und die Länge der Späne im Durchschnitt bei unter 40 mm liegt, nach mindestens einem der Ansprüche 1 bis 13, **dadurch gekennzeichnet, dass** die Späne in einem Trommelmischer beleimt und mit mindestens einem Streukopf gestreut und anschließend unter Druck und Temperatur zur Holzwerkstoffplatte verpresst werden.

15. Verfahren nach Anspruch 14, **dadurch gekennzeichnet, dass** über den mindestens einen Streukopf die Späne so gestreut werden, dass die Schneidspäne zumindest teilweise bevorzugt zur Ober- und Unterseite der späteren Plattenoberfläche gestreut werden, während die Schlagspäne bevorzugt von der Oberfläche weg gestreut werden, um ebene Oberflächen der so hergestellten Platte zu gewährleisten.

16. Verfahren nach Anspruch 14, **dadurch gekennzeichnet, dass** über den mindestens einen Streukopf eine im Wesentlichen homogene Mischung der Späne gestreut wird.

17. Verfahren nach einem der Ansprüche 14 bis 16, **dadurch gekennzeichnet, dass** zur weiteren Herabsetzung der Rohdichte aufgeschäumte bzw. bei der Verpressung aufschäumende feste oder flüssige Bestandteile, wie Kunststoffpartikel aus Polystyrol oder aufgeschäumte bzw. bei der Verpressung aufschäumende Polyurethane zugegeben werden.

## Claims

1. Lightweight wood material board which has a single-layer construction and is made of flakes or wood particles which are bonded together,
***characterised in that***
- this has a bulk density of below 500 kg/m³,
- this consists of a mixture of crushed- and sliced flakes and the proportion of crushed flakes is between 5 and 30% and the proportion of sliced flakes is between 70 and 95% of the wood proportion of the board,
- the length of the flakes on average is below 40 mm.

2. Wood material board according to claim 1, **characterised in that** the crushed- and sliced flakes are distributed essentially uniformly in the wood material board.

3. Wood material board according to claim 1, **characterised in that** the sliced flakes are disposed at least partially on the upper- and underside of the board surface and the crushed flakes are disposed predominantly in the centre, below the board surfaces.

4. Wood material board according to one of the claims 1 to 3, **characterised in that** this was produced completely or at least predominantly from types of wood with a bulk density < 500 kg/m³.

5. Wood material board according to one of the claims 1 to 4, **characterised in that** the sliced flakes were produced by cutting chips on a knife ring flaker, the flakes having a thickness of approx. 0.2 to 0.9 mm, preferably of 0.3 to 0.6 mm and a length of 15 to 100 mm, preferably of 25 to 40 mm, and a width of 3 to 30 mm, preferably of 5 to 20 mm.

6. Wood material board according to one of the claims 1 to 5, **characterised in that** the sliced flakes were produced by cutting round wood on a knife shaft flaker, the flakes having a thickness of approx. 0.2 to 0.9 mm, preferably of 0.3 to 0.6 mm, and a length of 15 to 100 mm, preferably of 25 to 60 mm, and a width of 3 to 30 mm, preferably of 5 to 20 mm.

7. Wood material board according to one of the claims 1 to 6, **characterised in that** the sliced flakes are produced by cutting round wood on a knife ring flaker, the flakes having a thickness of approx. 0.2 to 0.9 mm, preferably of 0.3 to 0.6 mm, and a length of 15 to 145 mm, preferably of 25 to 60 mm, and a width of 3 to 30 mm, preferably of 5 to 20 mm.

8. Wood material board according to one of the claims 1 to 7, **characterised in that** the sliced flakes were produced by cutting on cutters other than those previously mentioned, the flakes having a thickness of approx. 0.2 to 0.9 mm, preferably of 0.3 to 0.6 mm, and a length of 15 to 100 mm, preferably of 25 to 60 mm, and a width of 3 to 30 mm, preferably of 5 to 20 mm.

9. Wood material board according to one of the claims 1 to 8, **characterised in that** the proportion of crushed flakes is preferably 10 to 15% of the wood proportion of the board and the crushed flakes were produced preferably by crushing mills or other mills and consist of coarser, thicker flakes or particles which have a matchstick-like, stick-like or cubic character, the flakes or particles having a small slenderness ratio with a simultaneously smaller width of 0.5 to 4 mm and a thickness of 0.5 to 4 mm, preferably of 1 to 2 mm.

10. Wood material board according to at least one of the claims 1 to 9, **characterised in that** 2 to 16% of glue is present relative to the wood proportion of the board.

11. Wood material board according to claim 10, **characterised in that** the glue is selected from an isocyanate glue, a polyurethane glue, a polycondensation glue, an acrylate-containing glue and/or a mixed resin.

12. Wood material board according to one of the claims 1 to 11, **characterised in that** the board comprises in addition 5 to 50% of foamed particles relative to the wood proportion, e.g. made of polystyrene and/or polyurethane.

13. Wood material board according to at least one of the claims 1 to 12, **characterised in that** the wood material board has a thickness of 6 to 200 mm.

14. Method for producing a wood material board which has a single-layer construction and is made of flakes or wood particles which are bonded together, the board having a bulk density of below 500 kg/m³, consisting of a mixture of crushed- and sliced flakes and the proportion of crushed flakes being between 5 and 30% and the proportion of sliced flakes being between 70 and 95% of the wood proportion of the board, and the length of the flakes on average being below 40 mm, according to at least one of the claims 1 to 13, **characterised in that** the flakes are coated with glue in a drum mixer and scattered with at least one scattering head and subsequently compressed under pressure and temperature to form the wood material board.

15. Method according to claim 14, **characterised in that** the flakes are scattered via the at least one scattering head such that the sliced flakes are scattered, at least partially, preferably towards the upper- and underside of the subsequent board surface, whilst the crushed flakes are scattered preferably away from the surface in order to ensure even surfaces of the thus produced board.

16. Method according to claim 14, **characterised in that** an essentially homogeneous mixture of the flakes is scattered via the at least one scattering head.

17. Method according to one of the claims 14 to 16, **characterised in that**, for further reduction in the bulk density, solid or liquid components, which are foamed or foam during the compression, such as plastic material particles made of polystyrene or polyurethanes which are foamed or foam during the compression, are added.

## Revendications

1. Panneau dérivé du bois, léger, à structure monocouche, constitué de copeaux ou de particules de bois collés les uns aux autres, **caractérisé en ce que**
- il présente une masse volumique apparente inférieure à 500 kg/m³,
- il se compose d'un mélange de copeaux de broyage et de copeaux de coupe, et la proportion des copeaux de broyage est comprise entre 5 et 30 % et la proportion des copeaux de coupe est comprise entre 70 et 95 % de la proportion de bois du panneau,
- la longueur des copeaux est en moyenne inférieure à 40 mm.

2. Panneau dérivé du bois selon la revendication 1, **caractérisé en ce que** les copeaux de broyage et les copeaux de coupe sont répartis, sensiblement, uniformément dans le panneau dérivé du bois.

3. Panneau dérivé du bois selon la revendication 1, **caractérisé en ce que** les copeaux de coupe sont disposés au moins partiellement sur la face supérieure et la face inférieure de la surface du panneau, et les copeaux de broyage sont disposés en majorité en position centrale, en-dessous des surfaces du panneau.

4. Panneau dérivé du bois selon l'une quelconque des revendications 1 à 3, **caractérisé en ce qu'**il a été fabriqué totalement ou au moins en majorité à partir d'espèces de bois présentant une masse volumique apparente < 500 kg/m³.

5. Panneau dérivé du bois selon l'une quelconque des revendications 1 à 4, **caractérisé en ce que** les copeaux de coupe ont été fabriqués par déchiquetage de copeaux hachés sur une déchiqueteuse à couteau annulaire, les copeaux présentant une épaisseur d'environ 0,2 à 0,9 mm, de préférence de 0,3 à 0,6 mm, et une longueur de 15 à 100 mm, de préférence de 25 à 40 mm, et une largeur de 3 à 30 mm, de préférence de 5 à 20 mm.

6. Panneau dérivé du bois selon l'une quelconque des revendications 1 à 5, **caractérisé en ce que** les copeaux de coupe ont été fabriqués par déchiquetage de bois rond sur une déchiqueteuse à arbre porte-couteaux, les copeaux présentant une épaisseur d'environ 0,2 à 0,9 mm, de préférence de 0,3 à 0,6 mm, et une longueur de 15 à 100 mm, de préférence de 25 à 60 mm, et une largeur de 3 à 30 mm, de préférence de 5 à 20 mm.

7. Panneau dérivé du bois selon l'une quelconque des revendications 1 à 6, **caractérisé en ce que** les copeaux de coupe sont produits par déchiquetage de bois rond sur une déchiqueteuse à couteau annulaire, les copeaux présentant une épaisseur d'environ 0,2 à 0,9 mm, de préférence de 0,3 à 0,6 mm, et une longueur de 15 à 145 mm, de préférence de 25 à 60 mm, et une largeur de 3 à 30 mm, de préférence de 5 à 20 mm.

8. Panneau dérivé du bois selon l'une quelconque des revendications 1 à 7, **caractérisé en ce que** les copeaux de coupe ont été fabriqués par déchiquetage sur une autre déchiqueteuse que celles susmentionnées, les copeaux présentant une épaisseur d'environ 0,2 à 0,9 mm, de préférence de 0,3 à 0,6 mm, et une longueur de 15 à 100 mm, de préférence de 25 à 60 mm, et une largeur de 3 à 30 mm, de préférence de 5 à 20 mm.

9. Panneau dérivé du bois selon l'une quelconque des revendications 1 à 8, **caractérisé en ce que** la proportion des copeaux de broyage est, de préférence, de 10 à 15 % de la proportion de bois du panneau, et les copeaux de broyage ont été fabriqués de préférence grâce à des broyeurs à percussion ou d'autres broyeurs, et se composent de particules ou de copeaux plus grossiers, plus épais, qui présentent un aspect de type allumette, de type bâtonnet ou cubique, les copeaux ou les particules possédant un faible degré de finesse pour une largeur simultanément plus faible de 0,5 à 4 mm et une épaisseur de 0,5 à 4 mm, de préférence de 1 à 2 mm.

10. Panneau dérivé du bois selon au moins l'une quelconque des revendications 1 à 9, **caractérisé par** la présence de 2 à 16 % de colle par rapport à la proportion de bois du panneau.

11. Panneau dérivé du bois selon la revendication 10, **caractérisé en ce que** la colle est choisie parmi un adhésif isocyanate, un adhésif polyuréthane, une colle de polycondensation, un adhésif contenant des acrylates et/ou une résine mixte.

12. Panneau dérivé du bois selon l'une quelconque des revendications 1 à 11, **caractérisé en ce que** le panneau contient en outre 5 à 50 % de particules expansées par rapport à la proportion de bois, par exemple de polystyrène et/ou de polyuréthane.

13. Panneau dérivé du bois selon au moins l'une quelconque des revendications 1 à 12, **caractérisé en ce que** le panneau dérivé du bois présente une épaisseur de 6 à 200 mm.

14. Procédé de fabrication d'un panneau dérivé du bois à structure monocouche, constitué de copeaux ou de particules de bois collées les unes aux autres, le panneau présentant une masse volumique apparente inférieure à 500 kg/m³, se compose d'un mélange de copeaux de broyage et de copeaux de coupe, et la proportion des copeaux de broyage est comprise entre 5 et 30 % et la proportion des copeaux de coupe est comprise entre 70 et 95 % de la proportion de bois du panneau, et la longueur des copeaux est en moyenne inférieure à 40 mm, selon au moins l'une des revendications 1 à 13, **caractérisé en ce que** les copeaux sont collés dans un mélangeur à tambour et sont dispersés à l'aide d'au moins une tête de dispersion, puis sont pressés sous pression et à une certaine température pour donner le panneau dérivé du bois.

15. Procédé selon la revendication 14, **caractérisé en ce que**, par l'au moins une tête de dispersion, les copeaux sont dispersés de telle sorte que les copeaux de coupe sont dispersés au moins partiellement, de préférence, vers la face supérieure et la face inférieure de la surface postérieure du panneau, tandis que les copeaux de coupe sont dispersés de préférence en étant éloigné de la surface, pour garantir des surfaces planes du panneau ainsi fabriqué.

16. Procédé selon la revendication 14, **caractérisé en ce qu'**un mélange, sensiblement, homogène des copeaux est dispersé par l'au moins une tête de dispersion.

17. Procédé selon l'une quelconque des revendications 14 à 16, **caractérisé en ce que**, pour abaisser encore la masse volumique apparente, des composants solides ou liquides, expansées ou destinées à être expansées lors du pressage, tels que des particules plastiques de polystyrène, ou des polyuréthanes, expansés ou destinés à être expansés lors du pressage sont ajoutés.
